# EUROPEAN PATENT SPECIFICATION

(11) **EP 2 261 001 B1**
(45) Date of publication and mention of the grant of the patent: **09.07.2014**
(21) Application number: 09716266.3
(22) Date of filing: 03.03.2009
(51) Int. Cl.: B29C 45/64, B29C 45/03, B29C 45/74, B29C 45/77, B29C 45/76

(54) **VERTICAL MICROINJECTION MACHINE**
VERTIKALMIKROINJEKTIONSMASCHINE
MACHINE À MICRO-INJECTION VERTICALE

(30) Priority: 03.03.2008 CN 200820007206 U
(43) Date of publication of application: 15.12.2010
(73) Proprietor: The Hong Kong Polytechnic University, Hong Kong (CN)
(72) Inventor: YUNG, Kai-leung, Kowloon Hong Kong (CN)
(74) Representative: Intès, Didier Gérard André
(86) International application number: PCT/CN2009/000225
(87) International publication number: WO 2009/109105

(56) References cited:
- CN-A- 1 724 240
- CN-A- 1 843 739
- CN-C- 1 171 715
- CN-Y- 2 931 071
- CN-Y- 201 195 382
- JP-A- 2000 190 368
- JP-A- 2003 127 180
- US-A1- 2003 082 262
- US-A1- 2006 018 992
- P r o f . K L Y U N G: "An Innovative Micro Injection Molding Machine", The Hong Kong Polytechnic University , 15 April 2007 (2007-04-15), page 1, XP002693477, Retrieved from the Internet: URL:http://www.polyu.edu.hk/ife/corp/cntim gs/techsearch/1_ISE_01_0812.pdf [retrieved on 2013-03-08]

## Description

### TECHNICAL FIELD

The present invention relates to an improvement of an injection machine, and more particularly relates to a vertical microinjection machine.

### BACKGROUND

It is well known that the injection moulding process provides the capability to mass-produce complicated components in a precise manner. And more and more injection machines have been used for the manufacture of the micro components.

The known vertical injection machine comprises an injection unit mounted in vertical orientation from above to bottom and a mould closing system oriented horizontally or vertically, and this mould closing system comprises a mould having an upper mould and a lower mould. The upper mould and the lower mould can define a mould cavity between them when brought together by a vertical movement relative to each other. The molten material can be injected into the mould under a force sufficient to resist the pressure produced by the molten material. After the component is cooled and solidified, the mould is opened and then the component is ejected.

Based on the known vertical injection machine, a conventional vertical microinjection machine further comprises a plasticizing unit, an injection unit and a reciprocating screw through which the molten material is fed into an injection cylinder of the injection machine. By moving the screw forward, the molten material is forced to enter the mould cavity through a nozzle. After the material in front of the screw has achieved a desired volume, the movement of the screw is stopped. Then the mould cavity is cooled and the injected material is solidified into a product having a desired profile.

After a period of usage, the known vertical injection machine commonly may have the problem that the precision is reduced during closing the moulds due to a small angle presented between the parting faces of the upper and lower moulds instead of completely closing up. In this case, the mould clamping force for the mould is non-uniform and the rate of inferior product is raised. The above problem mainly caused by the fact that the parts of the mould closing unit are subjected to an uneven force and deformed such that it is difficult to be restored. Therefore, it is vital to design and produce a microinjection machine that achieve a mould closing operation of high precision.

Document D1 (US2006/018992A1) discloses a vertical microinjection machine comprising a base and a driving unit, plasticizing unit, an injection unit, a mould closing system which are arranged on the base, wherein the mould closing system comprises a lower mould plate above the base, which is fixed by a bracket arranged on the base, an upper mould plate above said lower mould plate, which is arranged in parallel with said lower mould plate and is movable upward and downward relative to the lower mould plate, and two independent mould closing drive units are symmetrically arranged on the base, each of which comprises two thrust rods, one transmission part, one screw rod, one square shaped support frame and one linear guide, wherein upper ends of the thrust rods are fixedly arranged in said upper mould plate, and lower ends of the thrust rods are fixedly connected to the transmission part by passing through the lower mould plate, the square shaped support frame comprises an upper support plate, a lower support plate and supporting rods, the upper support plate is arranged in parallel with the base, the lower support plate is arranged on the base, the lower support plate is arranged on the base, the supporting rods are arranged perpendicular to the base.

Document D2 (CN2931071Y) discloses a vertical microinjection machine according which uses hydraulic drives for closing and clamping the mould located below the mechanism.

### SUMMARY OF THE INVENTION

The present invention has been developed in view of the above problem, and an object of the present invention is to provide a vertical microinjection machine which is capable of increasing the precision of the mould closing operation and prevent the parts of the mould closing unit from being deformed by force.

The vertical microinjection machine according to the invention comprises a base, a driving unit, a plasticizing unit, an injection unit, and a mould closing system. The driving unit, the plasticizing unit, the injection unit and the mould closing system are arranged on the base; wherein said mould closing system comprises: a lower mould plate above the base, which is fixed by a bracket arranged on the base; an upper mould plate above the lower mould plate, which is arranged in parallel with said lower mould plate and is movable upward and downward relative to the lower mould plate; and two independent mould closing drive units symmetrically arranged on the base 1, each of which comprises two thrust rods, one transmission part, one screw rod, one servo motor, one square "□" shaped support frame and one linear guide. Upper ends of said thrust rods are fixedly mounted in said upper mould plate, and lower ends of said thrust rods are fixedly connected to said transmission part by passing through said lower mould plate (fixed base plate). The transmission part is provided with an internal thread so as to be fitted to said screw rod. Said square "□" shaped support frame comprises an upper support plate, a lower support plate and supporting rods. Said upper support plate is arranged in parallel with the base, said supporting rods are arranged perpendicular to the base, said screw rod is arranged in parallel with said supporting rods, and said linear guide is arrange on said supporting rods in parallel with said screw rod. Said transmission part moves along said linear guide and rotatably propels said two thrust rods to move up and down by means of bearings. Said screw rod is driven by said servo motor through a rotation mechanism.

According to the invention, preferably, the supporting rods of said square "□" shaped support frame have a shape of "U".

According to the invention, preferably, said transmission part has a shape of "-++-" and portion thereof perpendicular to the base portion are connected with said linear guide.

According to the invention, preferably, said rotation mechanism is a timing belt and a pulley or gear train.

According to the invention, preferably, said transmission part is connected with a carriage.

According to the invention, preferably, an injection part of said injection unit comprises a nozzle, a piston and a heater, wherein said piston is arranged inside the nozzle along an axis for pushing a molten material out of the nozzle; said heater surrounds the outside of the nozzle for maintaining a temperature of the molten material in the nozzle. A tip of said nozzle is protruded into said mould and directly connected with a runner of said mould. More preferably, this vertical microinjection machine comprises a load cell (pressure measurement element), which is arranged on a lower end portion of the piston within the injection unit. This load cell measures a load or injection force of the piston during operation and forms a transmitting closed loop with a controller used for controlling the precision of the injection amount in real time.

According to the invention, preferably, this vertical microinjection machine further comprises a pressure sensor, which is arranged at an outlet of said plasticizing unit, for measuring a pressure of the molten material within the plasticizing unit in real time and delivering a signal of this pressure to a controller for stabilizing the pressure of the molten material.

According to the invention, preferably, this vertical microinjection machine further comprises a control unit for controlling the servo motors of said two mould closing drive units to operate synchronously.

The vertical microinjection machine according to the invention utilizes two independent mould closing drive units, in case of any small gap existed between the upper and tower parting faces and the resulting non-uniform force can be eliminated by means of adjusting one of the mould closing drive units separately after the moulds are closed up, so that different parts of the mould parting surfaces are closed/ clamped with a uniform force, thereby inferior product as a result of the non-uniform force is avoided. Additionally, in the mould closing drive units of the vertical microinjection machine according to the invention, the screw rods are driven to rotate by the servo motors; the transmission provided with the internal thread is mounted around the screw rod; the transmission is propelled to move stably by rotation of the screw rod, and meanwhile the transmission is maintained to move stably in a vertical plane by the linear guide. When the servo motors of two mould closing drive units are operated synchronously, the transmission and the thrust rods linked with it can move synchronously, so the circumstance that these parts are deformed by force as a result of asynchronous movement is avoided.

### BRIEF DESCRIPTION OF THE DRAWINGS

Hereinafter, the invention will be described in more detail with the aid of various embodiments with reference to the accompanying drawings, in which:
Fig. 1 is a schematic diagram of the vertical microinjection machine according to the invention;
Fig. 2 is a schematic diagram of a mould closing drive unit of the vertical microinjection machine according to the invention;
Fig. 3 is an exploded schematic diagram of a mould closing drive unit of the vertical microinjection machine according to the invention;
Fig. 4 is a sectional diagram of a mould closing drive unit of the vertical microinjection machine according to the invention;
Fig. 5 is a sectional diagram of an injection portion in an injection unit of the vertical microinjection machine according to the invention;
Fig. 6 is a sectional diagram of an injection unit of the vertical microinjection machine according to the invention;
Fig. 7 is a sectional diagram of a feeding part for a plasticizing unit of the vertical microinjection machine according to the invention.

### DETAILED DESCRIPTION OF THE EMBODIMENTS

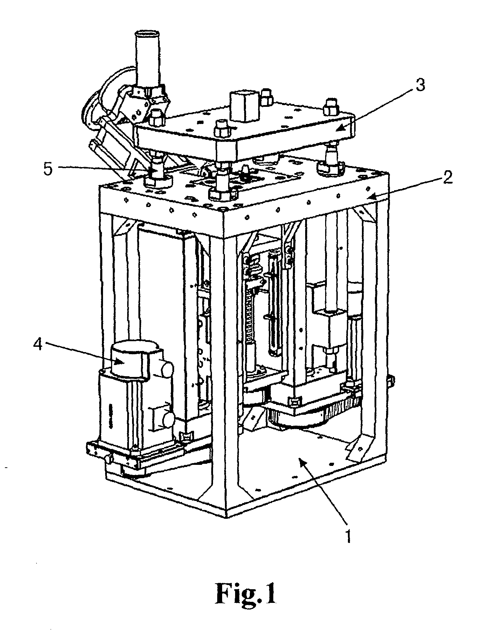

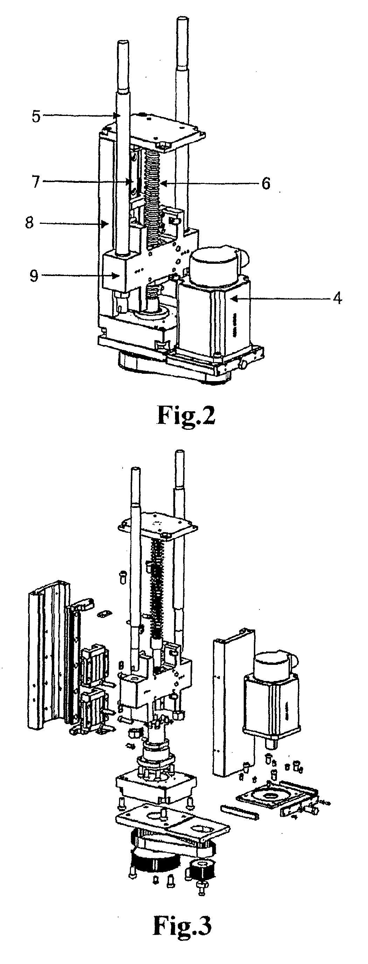

Hereinafter, the present invention will be described in more detail. Referring to the drawings, FIGS. 1 to 4 are schematic diagrams of the vertical microinjection machine according to the invention. This vertical microinjection machine comprises a base 1, a driving unit, a plasticizing unit, an injection unit, a mould and a mould closing system which are arranged on the base, wherein said mould closing system comprises: a lower mould plate 2 above the base 1, which is fixed by a bracket arranged on the base; an upper mould plate 3 above said lower mould, which is arranged in parallel with said lower mould plate and is movable upward and downward relative to the lower mould plate; and two independent mould closing drive units which are symmetrically arranged on the base 1. The upper and lower moulds are arranged in the upper mould plate 3 and the lower mould plate 2, respectively, and perform the operation of opening or closing the mould following up the movement of the upper mould plate 3. Each of the mould closing drive units comprises two thrust rods 5, one transmission part 9, one screw rod 6, one servo motor 4, one square "□" shaped support frame 8 and one linear guide 7. Upper ends of said thrust rods 5 are fixedly mounted in said upper mould plate 3, and lower ends of said thrust rods 5 are fixedly connected to said transmission part 9 by passing through said lower mould plate 2. The upper mould plate 3 is moved upon the action of the thrust rods 5. Said transmission part 9 has a shape of "-++-" and provided with an internal thread so as to be fitted to said screw rod 6. The screw rod 6 is rotated under the driving of said servo motor 4 through a timing belt and a pulley or gear train, so as to move the transmission part 9 up and down. The square "□" shaped support frame 8 comprises an upper support plate, a lower support plate and two supporting rods. Said upper support plate is arranged in parallel with the base 1, and said lower support plate is arranged on the base 1. Said supporting rods have a shape of "U" and arranged perpendicular to the base 1. Said screw rod 6 is arranged in parallel with said supporting rods and rotatably arranged in said upper and lower support plates by means of bearings. Said one linear guide 7 is arranged on said supporting rods in parallel with said screw rod 6. An upright part of said transmission part 9 is connected with the linear guide 7, such that the transmission part 9 moves along the linear guide 7. In addition, said transmission part 9 is connected with a carriage. Meanwhile, this vertical microinjection machine further comprises a control unit (not shown in the drawings) for controlling the servo motors 4 of said two mould closing drive units to operate synchronously. Since this vertical microinjection machine utilizes two independent mould closing drive units, any gap existed between the upper and lower parting faces can be eliminated by means of adjusting one of the mould closing drive units separately after the moulds are closed up, thereby different parts of the mould parting surfaces are subjected to a uniform force to avoid the inferior product as a result of a non-uniform force. Additionally, in the mould closing drive units of this vertical microinjection machine, the screw rods are driven to rotate by the servo motors, the transmission part provided with internal thread is mounted around the screw rod, the transmission part is moved stably by rotation of the screw rod, and meanwhile the transmission part is maintained to move stably in a vertical plane by using the linear guide. When the servo motors of the two mould closing drive units are operated synchronously, the transmission part and the thrust rods linked with it can move synchronously, thereby the circumstance that these parts are deformed by force as a result of an asynchronous movement is avoided.

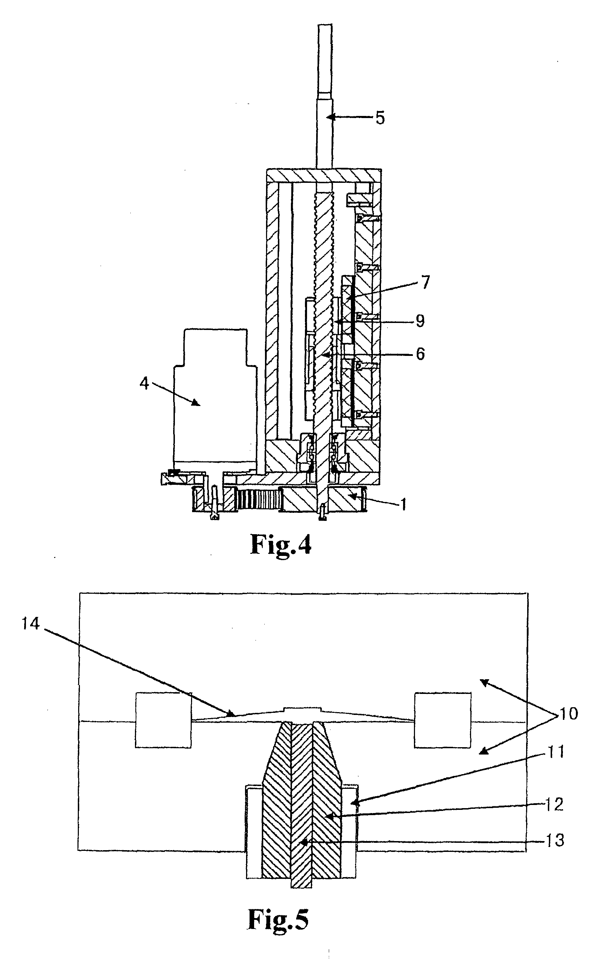

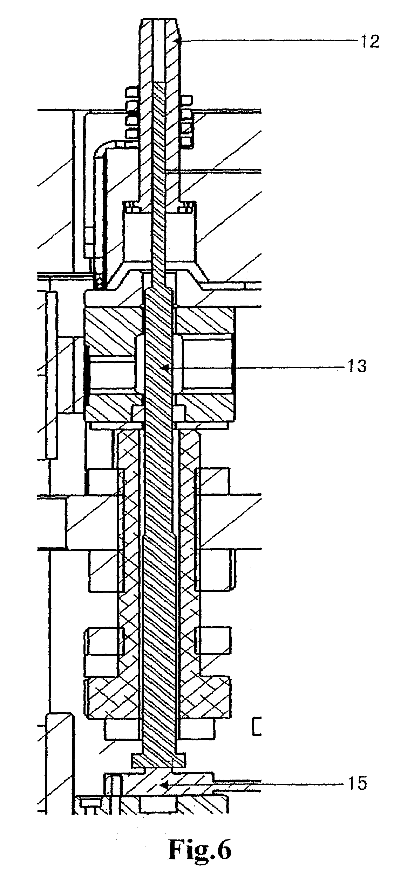

As shown in FIG. 5, an injection portion of the vertical microinjection machine according to the present invention comprises a nozzle 12, a piston 13 and a heater 11, wherein said piston 13 is arranged inside the nozzle along an axis for pushing a molten material out of the nozzle 12, said heater 11 surrounds the outside of the nozzle 12 for maintaining a temperature of the molten material in the nozzle 12. A tip of said nozzle 12 is protruded into said mould 10 and directly connected with a runner 14 of said mould. Such a design without sprue, in comparison with the traditional design with a sprue, has a prominence effect in respect of reducing the flow resistance against the molten material, reducing the consumption of the molten material, reducing the injection pressure, enhancing the precision of the injection amount and shortening the cycle time. Additionally, as shown in FIG. 6, this vertical microinjection machine comprises a load cell 15 (pressure measurement element), which is arranged on a lower end portion of the piston 13 within the injection unit. The load cell 15 measures the load or injection force of the piston 13 during operation and forms a transmitting closed loop with a controller (not shown) used for controlling the precision of the injection amount in real time.

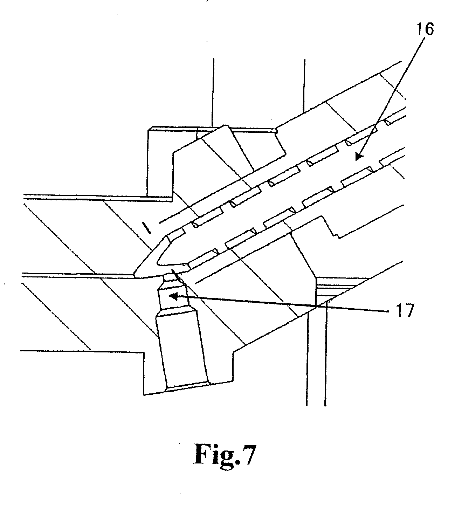

As shown in FIG. 7, in the feeding part of the plasticizing unit of the vertical microinjection machine according to the present invention, a pressure sensor 17 is arranged at an outlet of the plasticizing unit, for measuring the pressure of the molten material within the plasticizing unit 16 in real time and delivering a signal of this pressure to a controller (not shown) for stabilizing the pressure of the molten material.

## Claims

1. A vertical microinjection machine comprising a base (1) and a driving unit, a plasticizing unit, an injection unit, a mould closing system which are arranged on the base,
wherein the mould closing system comprises: a lower mould plate (2) above the base (1), which is fixed by a bracket arranged on the base (1), an upper mould plate (3) above said lower mould plate (2), which is arranged in parallel with said lower mould plate and is movable upward and downward relative to the lower mould plate, and two independent mould closing drive units are symmetrically arranged on the base, each of which comprises two thrust rods (5), one transmission part (9), one screw rod (6), one servo motor (4), one square shaped support frame (8) and one linear guide (7), wherein upper ends of the thrust rods (5) are fixedly arranged in said upper mould plate (3), and lower ends of the thrust rods (5) are fixedly connected to the transmission part (9) by passing through the lower mould plate (2), and the square shaped support frame comprises an upper support plate, a lower support plate and supporting rods, the upper support plate is arranged in parallel with the base (1), the lower support plate is arranged on the base (1), the supporting rods are arranged perpendicular to the base (1); **characterized in that** the transmission part (9) is provided with an internal thread so as to be fitted to the screw rod (6), the screw rod (6) is arranged in parallel with the supporting rods and rotatably arranged in the upper and lower support plates by means of bearings, the one linear guide (7) is arranged on the supporting rods in parallel with the screw rod (6), the transmission part (9) moves along the one linear guide (7), and the screw rod (6) is driven by the servo motor through a rotation mechanism; and transmission part (9) is located between the upper support plate and the lower support plate of the square shaped support frame.

2. The vertical microinjection machine according to claim 1, **characterized in that** the supporting rods of the square shaped support frame (8) have a shape of "U".

3. The vertical microinjection machine according to claim 1 or 2, **characterized in that** said transmission part (9) has a shape of "H" and portions thereof perpendicular to the base (1) are connected with said linear guide (7).

4. The vertical microinjection machine according to any one of claims 1 to 3, **characterized in that** said rotation mechanism includes a timing belt and a pulley or gear train.

5. The vertical microinjection machine according to any one of claims 1 to 4, **characterized in that** said transmission part (9) is connected with a carriage.

6. The vertical microinjection machine according to any one of claims 1 to 5, **characterized in that** an injection part of the injection unit comprises a nozzle (12), a piston (13) and a heater (11), wherein said piston (13) is arranged inside the nozzle (12) along an axis for pushing the molten material out of the nozzle (12), said heater (11) surrounds the outside of the nozzle (12) for maintaining a temperature of the molten material in the nozzle (12), and a tip of the nozzle (12) is protruded into the mould (10) and directly connected with a runner of the mould (14).

7. The vertical microinjection machine according to claim 6, further comprising a load cell (15), which is arranged on a lower end portion of the piston (13) within the injection unit, the load cell (15) measures a load or injection force of the piston (13) during operation and forms a transmitting closed loop with a controller used for controlling the precision of the injection amount into the mould cavity in real time.

8. The vertical microinjection machine according to any one of claims 1 to 7, further comprising a pressure sensor (17), which is arranged at an outlet of the plasticizing unit (16), for measuring a pressure of the molten material within the plasticizing unit (16) in real time and delivering a signal of the pressure to a controller for stabilizing the pressure of the molten material and hence precision dozing of the molten material into the injection unit.

9. The vertical microinjection machine according to any one of claims 1 to 8, further comprising a control unit for controlling the servo motors of the two mould closing drive units to operate synchronously.

## Patentansprüche

1. Vertikalmikroinjektionsmaschine, umfassend eine Grundplatte (1) und eine Antriebseinheit, eine Weichmachereinheit, eine Injektionseinheit, ein Gießformverschlusssystem, das auf der Grundplatte angeordnet ist,
wobei das Gießformverschlusssystem umfasst: eine untere Gießformplatte (2) oberhalb der Grundplatte (1), die durch eine Klammer befestigt ist, die auf der Grundplatte (1) angeordnet ist, eine obere Gießformplatte (3) oberhalb der unteren Gießformplatte (2), die parallel zur unteren Gießformplatte angeordnet ist und die in Bezug zur unteren Gießformplatte aufwärts und abwärts bewegbar ist, und zwei unabhängige Gießformverschlussantriebseinheiten, die auf der Grundplatte symmetrisch angeordnet sind, von denen jede zwei Schubstangen (5), ein Übertragungsteil (9), eine Gewindestange (6), einen Servomotor (4), einen quadratisch geformten Trägerrahmen (8) und eine Linearführung (7) umfasst, wobei obere Enden der Schubstangen (5) fest in der oberen Gießformplatte (3) angeordnet sind und untere Enden der Schubstangen (5) mit dem Übertragungsteil (9) fest verbunden sind, indem sie durch die untere Gießformplatte (2) verlaufen, und der quadratisch geformte Trägerrahmen eine obere Trägerplatte, eine untere Trägerplatte und Trägerstangen umfasst, wobei die obere Trägerplatte parallel zur Grundplatte (1) angeordnet ist, die untere Trägerplatte auf der Grundplatte (1) angeordnet ist und die Trägerstangen senkrecht zur Grundplatte (1) angeordnet sind,
**dadurch gekennzeichnet, dass** das Übertragungsteil (9) mit einem Innengewinde versehen ist, um an der Gewindestange (6) befestigt zu werden, wobei die Gewindestange (6) parallel zu den Trägerstangen angeordnet ist und durch Lagermittel in den oberen und unteren Trägerplatten drehbar angeordnet ist, die eine Linearführung (7) auf den Trägerstangen parallel zur Gewindestange (6) angeordnet ist, das Übertragungsteil (9) sich entlang der einen Linearführung (7) bewegt und die Gewindestange (6) von dem Servomotor über einen Rotationsmechanismus angetrieben ist, und das Übertragungsteil (9) zwischen der oberen Trägerplatte und der unteren Trägerplatte des quadratisch geformten Trägerrahmen angeordnet ist.

2. Vertikalmikroinjektionsmaschine nach Anspruch 1, **dadurch gekennzeichnet, dass** die Trägerstangen des quadratisch geformten Trägerrahmens (8) eine U-Form aufweisen.

3. Vertikalmikroinjektionsmaschine nach Anspruch 1 oder 2, **dadurch gekennzeichnet, dass** das Übertragungsteil (9) eine H-Form aufweist und Abschnitte davon, die senkrecht zur Grundplatte (1) sind, mit der Linearführung (7) verbunden sind.

4. Vertikalmikroinjektionsmaschine nach einem der Ansprüche 1 bis 3, **dadurch gekennzeichnet, dass** der Rotationsmechanismus einen Zahnriemen und eine Antriebsscheibe oder ein Zahnradpaar umfasst.

5. Vertikalmikroinjektionsmaschine nach einem der Ansprüche 1 bis 4, **dadurch gekennzeichnet, dass** das Übertragungsteil (9) mit einem Schlitten verbunden ist.

6. Vertikalmikroinjektionsmaschine nach einem der Ansprüche 1 bis 5, **dadurch gekennzeichnet, dass** ein Injektionsteil der Injektionseinheit eine Düse (12), einen Kolben (13) und einen Heizer (11) umfasst, wobei der Kolben (13) in der Düse (12) entlang einer Achse angeordnet ist, um die Schmelzmasse aus der Düse (12) herauszudrücken, der Heizer (11) das Äußere der Düse (12) umgibt, um eine Temperatur der Schmelzmasse in der Düse (12) aufrechtzuhalten, und eine Spitze der Düse (12) in die Gießform (10) hineinragt und direkt mit einem Läufer der Gießform (14) verbunden ist.

7. Vertikalmikroinjektionsmaschine nach Anspruch 6, ferner umfassend eine Messdose (15), die auf einem unteren Endabschnitt des Kolbens (13) innerhalb der Injektionseinheit angeordnet ist, wobei die Messdose (15) während des Betriebs eine Last oder Injektionskraft des Kolbens (13) misst und eine Endlosübertragungsschleife mit einer Steuervorrichtung bildet, die dazu verwendet wird, die Präzision der Injektionsmenge in die Gießformaussparung in Echtzeit zu steuern.

8. Vertikalmikroinjektionsmaschine nach einem der Ansprüche 1 bis 7, ferner umfassend einen Drucksensor (17), der an einem Ausgang der Weichmachereinheit (16) angeordnet ist, um einen Druck der Schmelzmasse in der Weichmachereinheit (16) in Echtzeit zu messen und einer Steuervorrichtung ein Drucksignal zu übermitteln, um den Druck der Schmelzmasse zu stabilisieren und so die Schmelzmasse in der Injektionseinheit präzise zu dosieren.

9. Vertikalmikroinjektionsmaschine nach einem der Ansprüche 1 bis 8, ferner umfassend eine Steuereinheit zum Steuern, dass die Servomotoren der zwei Gießformverschlussantriebseinheiten synchron arbeiten.

## Revendications

1. Machine de micro-injection verticale comportant une base (1) et une unité d'entraînement, une unité de plastification, une unité d'injection, un système de fermeture de moule qui est disposé sur la base,
dans laquelle le système de fermeture de moule comporte : une plaque de moule inférieure (2) au-dessus de la base (1), qui est fixée par un support disposé sur la base (1), une plaque de moule supérieure (3) au-dessus de ladite plaque de moule inférieure (2), qui est disposée parallèlement à ladite plaque de moule inférieure et est mobile vers le haut et vers le bas par rapport à la plaque de moule inférieure, et deux unités d'entraînement de fermeture de moule indépendantes sont disposées de manière symétrique sur la base, qui comportent chacune deux tiges de poussée (5), une partie de transmission (9), une tige de vis (6), un servomoteur (4), un cadre de support de forme carrée (8) et un guide linéaire (7), des extrémités supérieures des tiges de poussée (5) étant disposées de façon fixe dans ladite plaque de moule supérieure (3), et des extrémités inférieures des tiges de poussée (5) étant reliées de façon fixe à la partie de transmission (9) en passant à travers la plaque de moule inférieure (2), et le cadre de support de forme carrée comporte une plaque de support supérieure, une plaque de support inférieure et des tiges de support, la plaque de support supérieure est disposée parallèlement à la base (1), la plaque de support inférieure est disposée sur la base (1), les tiges de support sont disposées perpendiculairement à la base (1) ; **caractérisée en ce que** la partie de transmission (9) est pourvue d'un filetage interne de façon à être montée sur la tige de vis (6), la tige de vis (6) est disposée parallèlement aux tiges de support et disposée de façon rotative dans les plaques de maintien supérieure et inférieure à l'aide de paliers, ledit un guide linéaire (7) est disposé sur les tiges de support parallèlement à la tige de vis (6), la partie de transmission (9) se déplace le long dudit un guide linéaire (7), et la tige de vis (6) est entraînée par le servomoteur par l'intermédiaire d'un mécanisme de rotation ; et la partie de transmission (9) se trouve entre la plaque de support supérieure et la plaque de support inférieure du cadre de support de forme carrée.

2. Machine de micro-injection verticale selon la revendication 1, **caractérisée en ce que** les tiges de support du cadre de support de forme carrée (8) ont une forme de « U ».

3. Machine de micro-injection verticale selon la revendication 1 ou 2, **caractérisée en ce que** ladite partie de transmission (9) a une forme de « H » et des parties de celle-ci perpendiculaires à la base (1) sont reliées audit guide linéaire (7).

4. Machine de micro-injection verticale selon l'une quelconque des revendications 1 à 3, **caractérisée en ce que** ledit mécanisme de rotation comprend une courroie crantée et un train de poulies ou d'engrenages.

5. Machine de micro-injection verticale selon l'une quelconque des revendications 1 à 4, **caractérisée en ce que** ladite partie de transmission (9) est reliée à un chariot.

6. Machine de micro-injection verticale selon l'une quelconque des revendications 1 à 5, **caractérisée en ce qu'**une partie d'injection de l'unité d'injection comporte une buse (12), un piston (13) et un dispositif de chauffage (11), ledit piston (13) étant disposé à l'intérieur de la buse (12) le long d'un axe afin de pousser la matière fondue hors de la buse (12), ledit dispositif de chauffage (11) entourant l'extérieur de la buse (12) afin de maintenir une température de la matière fondue dans la buse (12), et une extrémité de la buse (12) dépassant dans le moule (10) et étant reliée directement à un trou de coulée du moule (14).

7. Machine de micro-injection verticale selon la revendication 6, comportant en outre une cellule de charge (15), qui est disposée sur une partie d'extrémité inférieure du piston (13) à l'intérieur de l'unité d'injection, la cellule de charge (15) mesure une charge ou une force d'injection du piston (13) pendant l'opération et forme une boucle de transmission fermée avec un système de commande utilisé pour commander la précision de la quantité d'injection dans la cavité de moule en temps réel.

8. Machine de micro-injection verticale selon l'une quelconque des revendications 1 à 7, comportant en outre un capteur de pression (17), qui est disposé à une sortie de l'unité de plastification (16), afin de mesurer une pression de la matière fondue dans l'unité de plastification (16) en temps réel et délivrer un signal de la pression à un système de commande afin de stabiliser la pression de la matière fondue et par conséquent doser avec précision la matière fondue dans l'unité d'injection.

9. Machine de micro-injection verticale selon l'une quelconque des revendications 1 à 8, comportant en outre une unité de commande destinée à commander les servomoteurs des deux unités d'entraînement de fermeture de moule de façon à fonctionner en synchronisation.
